(19) Europäisches Patentamt / European Patent Office / Office européen des brevets

(11) **EP 3 677 929 A1**

(12) **DEMANDE DE BREVET EUROPEEN**

(43) Date de publication:
08.07.2020 Bulletin 2020/28

(21) Numéro de dépôt: **19220096.2**

(22) Date de dépôt: **30.12.2019**

(51) Int Cl.:
*G01S 17/933* (2020.01)   *G01S 15/93* (2020.01)
*G01S 17/875* (2020.01)   *G01S 15/87* (2006.01)
*G01S 13/87* (2006.01)   *G01S 13/60* (2006.01)
*G01S 13/58* (2006.01)   *G01S 15/58* (2006.01)
*G01S 15/60* (2006.01)   *G01S 17/58* (2006.01)
*G01S 13/935* (2020.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.01.2019 FR 1900122**

(71) Demandeur: **Commissariat à l'Energie Atomique et aux Energies Alternatives**
**75015 Paris (FR)**

(72) Inventeurs:
• **FRESNEAU, Aurélien**
**38054 GRENOBLE (FR)**
• **HEITZMANN, Frédéric**
**38054 GRENOBLE (FR)**
• **TONDA, Arnaud**
**38054 GRENOBLE (FR)**
• **ZARUDNIEV, Mykhailo**
**38054 GRENOBLE (FR)**

(74) Mandataire: **Priori, Enrico et al**
**Marks & Clerk France**
**Immeuble "Visium"**
**22, avenue Aristide Briand**
**94117 Arcueil Cedex (FR)**

(54) **DISPOSITIF D'ESTIMATION DU VECTEUR VITESSE D'UN CORPS RIGIDE MOBILE**

(57) Dispositif d'estimation de la vitesse d'un corps rigide mobile par rapport à son environnement (OB1, OB2, OB3), comprenant :
- au moins trois capteurs de distance (TV), chaque capteur de distance étant adapté pour mesurer à la fois sa distance par rapport à un obstacle selon un axe de visée (AV) et un angle formé par ledit axe de visée et ledit obstacle, les axes de visée des capteurs étant alignés selon au moins trois directions de préférence non coplanaires ($u_1$, $u_2$, $u_3$) ; et
- un dispositif de traitement de données, configuré ou programmé pour calculer une estimation du vecteur vitesse ($v_O$) du corps mobile, auquel le dispositif d'estimation est fixé, en fonction de mesures de distance et d'angle issues desdits capteurs.

Drone équipé d'un tel dispositif d'estimation de sa vitesse.

[Fig. 6]

**Description**

**Domaine technique**

La présente invention concerne un dispositif pour estimer le vecteur vitesse d'un corps rigide mobile, par exemple d'un drone.

L'invention s'applique notamment au domaine du pilotage des drones dans les espaces fermés. Elle trouve également d'autres applications, par exemple à la robotique.

**Etat de la technique**

Il est connu d'estimer la position et, le cas échéant, la vitesse d'un corps mobile tel qu'un drone au moyen d'un système de positionnement global par satellite (GNSS). Cette approche, cependant, ne convient pas lorsque l'objet n'a pas une vue dégagée vers le ciel, comme dans le cas d'un drone évoluant dans un espace fermé ou un outil fixé à un bras robotique dans une usine.

Il est également connu d'utiliser, pour les applications d'intérieur, une infrastructure dédiée comprenant des balises terrestres. Par exemple, le document US9810767 décrit un système d'estimation de position utilisant des balises en technologie Ultra Large Bande (UWB), ainsi qu'un capteur de pression embarqué (pour la mesure d'altitude) et une centrale inertielle, également embarquée. Les signaux issus du capteur de pression, de la centrale inertielle et d'un récepteur UWB sont traités à l'aide de plusieurs filtres de Kalman pour parvenir à l'estimation de position, dont une estimation de vitesse peut être déduite. Un inconvénient de cette approche est qu'il nécessite une infrastructure spécifique équipée. Un autre inconvénient est la sensibilité au bruit ambiant, qui peut biaiser l'estimation de vitesse, voire rendre son obtention impossible.

Il est également connu d'estimer la vitesse d'un corps mobile uniquement à partir de capteurs inertiels embarqués. Ces capteurs permettent de déterminer la vitesse par intégration temporelle d'une accélération mesurée, mais cela conduit à des estimations de vitesse et de position affectées d'une dérive, et donc d'une erreur non bornée à l'infini. Cette approche n'est donc pas satisfaisante. Pour cette raison, les capteurs inertiels sont généralement associés à l'utilisation de signaux d'infrastructure.

Il est également connu d'estimer la vitesse par analyse d'un flux vidéo issu d'une caméra embarquée. L'analyse du flux vidéo peut être combinée avec des informations issues de capteurs embarqués, par exemple de type inertiel. Ces solutions peuvent s'avérer coûteuses en temps de calcul, en énergie et en poids. En outre, une connaissance préalable de l'environnement observé par la caméra est généralement requise, voire un aménagement de cet environnement, ce qui limite les possibilités d'application de ces méthodes.

Les documents FR3000813 et US9387927, par exemple, décrivent un drone volant capable de déterminer sa position de manière autonome à l'aide d'une caméra à visée verticale dirigée vers le sol, d'une centrale inertielle et d'un altimètre. Cette approche présente l'avantage de ne pas nécessiter de communication avec l'extérieur pour déterminer sa position, mais elle nécessite néanmoins un aménagement de l'environnement puisque la détermination de la position se base sur l'analyse de motifs prédéterminés connus positionnés au sol et visibles par la caméra. Comme dans le cas précédent, il est donc nécessaire d'équiper l'environnement au préalable, ce qui n'est pas toujours possible ou souhaitable. De plus, l'analyse d'un flux vidéo en temps réel est une opération coûteuse en temps de calcul et impose donc des contraintes dans le cadre de l'intégration sur un drone.

Les documents EP2644240 et US8989924 décrivent un estimateur d'altitude pour drone utilisant un télémètre ultrasonore et un capteur barométrique, dont les mesures sont traitées par un filtre prédictif de Kalman basé sur un modèle dynamique du drone. Cette approche permet d'estimer l'altitude du drone au cours de son vol, sans connaissance a priori ni aménagement de son environnement, et sans nécessiter d'une communication avec l'extérieur. Cependant, il ne fournit qu'une mesure d'altitude et ne permet donc pas de déterminer le vecteur vitesse du drone en trois dimensions.

L'invention vise à surmonter les inconvénients précités de l'art antérieur. Plus précisément elle vise à permettre l'estimation de la vitesse d'un corps mobile, tel qu'un drone évoluant notamment dans un environnement fermé, ne nécessitant ni une connaissance a priori de l'environnement, ni l'équipement de cet environnement au moyen d'une infrastructure spécifique, ni une communication avec l'extérieur.

**Exposé de l'invention**

Conformément à l'invention, un tel but est atteint par l'utilisation de capteurs embarqués permettant de mesurer à la fois leur distance d'un obstacle (c'est-à-dire un objet quelconque qui fait partie de l'environnement) et l'angle d'incidence local de leur axe de visée sur l'obstacle. La mesure conjointe de la distance et de l'angle d'incidence permet de compenser l'absence de toute connaissance a priori de l'environnement. L'estimation de la vitesse est obtenue à partir d'une série temporelle de mesures issues de trois capteurs ou plus, dont les axes de visée sont orientés selon des directions non coplanaires.

Un objet de l'invention est donc un dispositif d'estimation de la vitesse d'un corps rigide mobile par rapport à son environnement, comprenant :

- au moins trois capteurs de distance, chaque capteur de distance étant adapté pour mesurer à la fois sa distance par rapport à un obstacle selon un axe de visée et un angle formé par ledit axe de visée et la surface dudit obstacle, localement assimilée à un plan; et
- un dispositif de traitement de données, configuré ou programmé pour calculer une estimation du vecteur vitesse du corps mobile, auquel le dispositif d'estimation est fixé, en fonction de mesures de distance et d'angle issues desdits capteurs ; dans lequel le dispositif de traitement de données est configuré ou programmé pour :
- calculer la composante du vecteur vitesse de chaque capteur de distance perpendiculaire à l'obstacle correspondant à partir d'au moins deux mesures successives de distance et d'angle issues dudit capteur, et
- obtenir le vecteur vitesse du corps mobile à partir desdites composantes.

Un autre objet de l'invention est un drone équipé d'un tel dispositif d'estimation de sa vitesse.
Des modes de réalisations particuliers d'un tel dispositif constituent l'objet des revendications dépendantes.

**Brève description des dessins**

D'autres caractéristiques, détails et avantages de l'invention ressortiront à la lecture de la description faite en référence aux dessins annexés donnés à titre d'exemple, dans lesquels:

[Fig. 1] représente une vue du haut d'un drone équipé d'un dispositif d'estimation de vitesse selon un mode de réalisation de l'invention ;

[Fig. 2] représente une vue latérale du drone de la figure 1 ;

[Fig. 3] représente un schéma fonctionnel d'un dispositif d'estimation de vitesse selon un mode de réalisation de l'invention ;

[Fig. 4] représente la géométrie d'une mesure de distance et d'angle d'incidence ;

[Fig. 5] illustre le principe de la mesure d'une composante de vitesse ;

[Fig. 6] est une représentation tridimensionnelle de trois plans de mesure, des composantes de vitesse mesurées perpendiculaires à ces trois plans et du vecteur vitesse résultant ; et

[Fig. 7] est un schéma fonctionnel d'un capteur pouvant être utilisé pour la mise en œuvre de l'invention.

**Description détaillée**

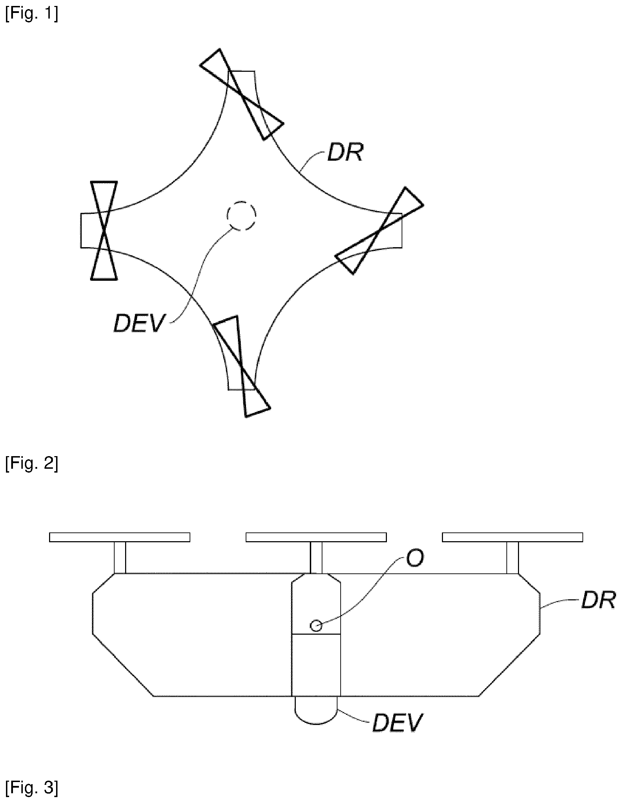

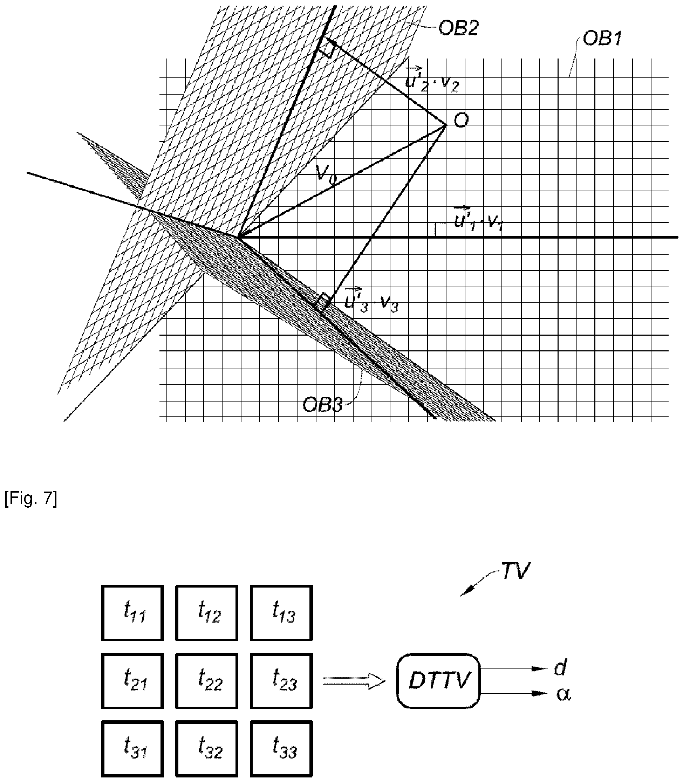

Les figures 1 et 2 représentent de manière très schématique un drone de type quadricoptère DR équipé d'un dispositif d'estimation de la vitesse DEV selon un mode de réalisation de l'invention. Dans cet exemple, le dispositif d'estimation DEV est agencé sur une face inférieure du drone, et ne coïncide pas avec son centre de masse (barycentre) O.
La figure 3 montre un schéma de principe du dispositif d'estimation DEV, qui comprend un dispositif de traitement des données DTD, au moins trois capteurs de distance de type « temps de vol », TV1, TV2, TV3 et une centrale inertielle CI comprenant trois gyromètres GM1, GM2, GM3.
Le dispositif de traitement des données DTD est typiquement une carte électronique comprenant un microprocesseur ou microcontrôleur programmé de manière opportune, le programme étant stocké dans une mémoire non volatile à état solide. En variante ou en complément, la carte peut comprendre un circuit numérique réalisé au moyen d'un circuit programmable (par exemple un FPGA) ou un circuit intégré dédié.
Les capteurs de distance de type « temps de vol » TV1, TV2, TV3 peuvent être de type optique (LIDAR), radar ou sonar. Ils présentent trois axes de visée AV1, AV2, AV3 orientés selon des directions $u_1, u_2, u_3$, de préférence non coplanaires et de manière encore préférée mutuellement orthogonales. Ces capteurs ne sont pas de type conventionnel, car ils doivent permettre de mesurer, en plus de la distance par rapport à un obstacle, l'angle $\alpha$ formé par leur axe de visée et le plan tangent à l'obstacle (dont la surface est supposée lisse, c'est-à-dire différentiable) au point d'incidence de l'axe de visée (angle d'incidence). Comme illustré sur la figure 7, un capteur TV convenant à la mise en œuvre de l'invention peut être obtenu au moyen d'une pluralité de capteurs à temps de vol conventionnels. Par exemple, dans le mode de réalisation de la figure 7, le capteur TV comprend neuf capteurs à temps de vol élémentaires $t_{11}$, $t_{12}$, $t_{13}$, $t_{21}$, $t_{22}$, $t_{23}$, $t_{31}$, $t_{32}$, $t_{33}$, de préférence des LIDARs, agencés de manière à former une matrice 3x3. Ces capteurs fournissent chacun une mesure de distance $d_{11}$, $d_{12}$, $d_{13}$, $d_{21}$, $d_{22}$, $d_{23}$, $d_{31}$, $d_{32}$, $d_{33}$, de préférence selon des axes de visée parallèles entre eux et à l'axe de visée AV du capteur composite TV. Un dispositif de traitement des données de temps de vol DTTV utilise ces mesures pour estimer, par interpolation, l'orientation et la position d'un plan représentant localement la surface d'un obstacle, et en déduit les valeurs de distance d et d'angle d'incidence $\alpha$. Le dispositif DTTV peut être intégré au dispositif de traitement DTD ou en être indépendant. Dans ce dernier cas, il est typiquement une carte électronique comprenant un microprocesseur ou microcontrôleur programmé de manière opportune, le programme étant stocké dans une mémoire non volatile à état solide et/ou comprenant un circuit numérique réalisé au moyen d'un circuit programmable (par exemple un FPGA) ou un circuit intégré dédié.

Les gyromètres G1, G2 et G3 de la centrale inertielle CI mesurent les vitesses angulaires de rotation autour de trois axes non coplanaires, et de préférence orthogonaux, ce qui permet de déterminer un vecteur vitesse angulaire $\omega$ du drone, modélisé par un corps rigide. En général, la centrale inertielle contient également des accéléromètres, qui ne sont pas exploités par l'invention.

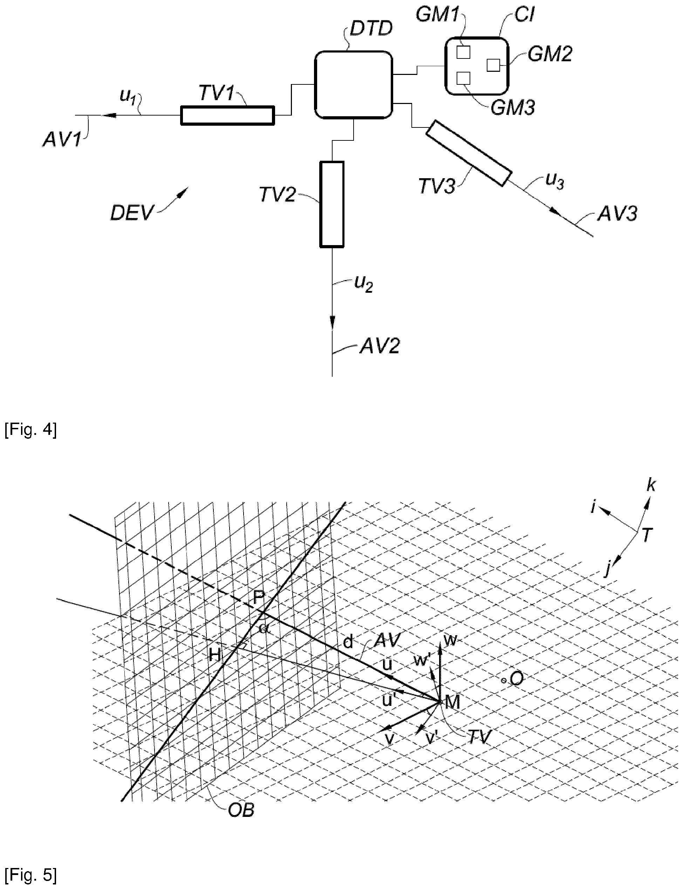

Le dispositif de traitement des données DTD reçoit en entrée une série temporelle de mesures de distances et d'angles d'incidence fournies par les capteurs TV1, TV2, TV3 et au moins une mesure de vitesse angulaire de rotation fournie par les gyromètres G1, G2 et G3, et calcule à partir de ces données une estimation du vecteur vitesse du drone DR - plus précisément, de son barycentre O - dans un référentiel terrestre. Le traitement qui permet de parvenir à cette estimation sera illustré ci-après à l'aide des figures 4 à 6.

La figure 4 illustre la géométrie d'une mesure de distance d et d'angle d'incidence $\alpha$ effectuée par un capteur TV convenant à la mise en œuvre de l'invention.

Soit $R_T$ le repère orthonormé direct (T, **i**, **j**, **k**) ayant pour origine un point T solidaire de la Terre (remarque : dans la description, hors équations, les grandeurs vectorielles sont représentées par des lettres en gras ; dans les équations et les figures, par des lettres surmontées d'une flèche). On cherche à déterminer le vecteur de vitesse $\mathbf{v_O}$ du barycentre O dans le référentiel terrestre $R_T$.

Soit $R_1$ le repère orthonormé direct (M, **u**, **v**, **w**) lié à un capteur TV attaché au drone en M. Comme expliqué plus haut, ce capteur permet de déterminer la distance d à un objet (« obstacle ») OB dans la direction **u** qui coïncide avec son axe de visée ainsi que l'angle d'incidence $\alpha$ du vecteur **u** avec la surface de l'objet OB, qui est localement assimilée à un plan. Si le capteur TV est du type matriciel décrit plus haut en référence à la figure 7, de préférence les lignes et colonnes de la matrice de capteurs élémentaires sont parallèles aux vecteurs **u** et **v,** bien que cela ne soit pas essentiel.

Soit P le point où l'axe de visée AV (orienté selon **u**) intersecte l'objet (plan) OB et H la projection normale du point M sur le plan OB.

On définit (M, **u'**, **v'**, **w'**) le repère orthonormé direct tel que **u'** est selon **OH** (c'est-à-dire qu'il est normal au plan OB), **v'** selon **PH** et **w'** est déduit de **u'** et **v'** de manière à obtenir un repère orthonormé direct : **w'=u'∧v'**, où « ∧ » représente le produit vectoriel.

On suppose que, entre deux instants de mesure $t_k$ et $t_{k+1}$ l'orientation du plan OB (et donc du vecteur **u'**) change peu ; cette hypothèse est raisonnable si la fréquence d'acquisition des mesures est suffisamment élevée par rapport à la vitesse de déplacement du drone et si l'objet OB présente une surface suffisamment régulière. Si on considère le cas d'un drone se déplaçant en intérieur, par exemple dans une pièce, sa vitesse est de l'ordre de quelques mètres par seconde et les objets l'entourant (parois, meubles...) présentent pour l'essentiel des surfaces planes dont les dimensions vont de plusieurs décimètres à quelques mètres, tandis que la cadence d'acquisition des mesures peut être de plusieurs centaines de Hz, voire de quelques kHz. L'hypothèse sera donc vérifiée la plupart du temps. Dans ces conditions, la composante de la vitesse du point M dans le référentiel terrestre $R_T$ selon la direction **u'**$_{k+1}$ peut être estimée par

[Math 1]

$$\vec{v}_{M//\vec{u'}_{k+1}} = \frac{d_{k+1} \sin \alpha_{k+1} - d_k \sin \alpha_k}{\Delta t} \vec{u'}_{k+1}$$

où les indices « k » et « k+1 » désignent les valeurs mesurées aux temps $t_k$ et $t_{k+1}$, respectivement, et $\Delta t = t_{k+1} - t_k$.

Cette vitesse est calculée au point M dans le référentiel $R_T$. Pour connaître la vitesse $\mathbf{v_{O//u'}}$ au point O, on utilise la formule suivante :

[Math 2]

$$\vec{v}_{O//\vec{u'}} = \vec{v}_{M//\vec{u'}} + \left( (\overrightarrow{OM} \wedge \vec{\omega}) \cdot \vec{u'} \right) \vec{u'}$$

Cette formule résulte de la projection sur **u'** de la relation entre les vitesses de deux points O et M d'un solide indéformable ayant un vecteur vitesse angulaire de rotation ω. Dans la formule, « · » désigne le produit scalaire.

D'une manière plus générale, si on considère trois capteurs qui observent trois obstacles Obi (ou trois portions différentes d'un même obstacle) ayant des normales **u'$_i$** (i∈(1 ; 2 ; 3)) non coplanaires on a

[Math 3]

$$\vec{v}_{O//\vec{u'}_i} = v_i \cdot \vec{u'}_i$$

avec :

[Math 4]

$$v_i = \frac{d_{i_{k+1}} \sin \alpha_{i_{k+1}} - d_{i_k} \sin \alpha_{i_k}}{\Delta t} + (\overrightarrow{OM_i} \wedge \vec{\omega}) \times \vec{u'}_{i_{k+1}}$$

Soient (u'$_{ix}$, u'$_{iy}$, u'$_{iz}$)$^T$ les coordonnées du vecteur **u'$_i$** dans R$_T$ et (v$_{Ox}$, v$_{Oy}$, v$_{Oz}$)$^T$ les coordonnées du vecteur **v$_O$** dans R$_T$ ; « $^T$ » étant l'opérateur de transposition.

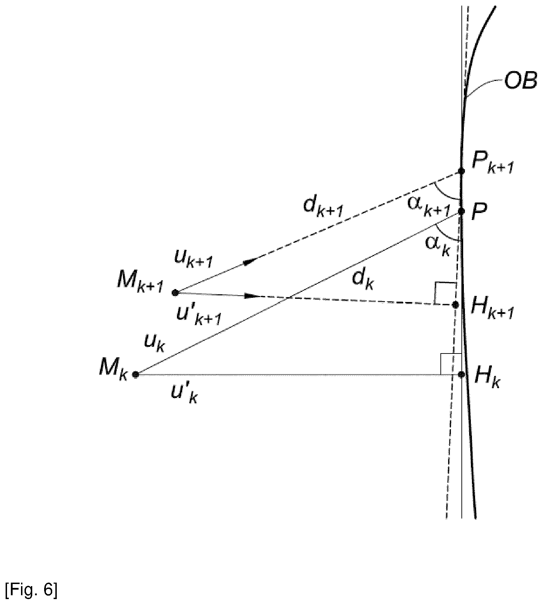

L'extrémité du vecteur **v$_O$** appartient aux trois plans orthogonaux aux vecteurs **u$_i$'** **(cf. Figure 6).** Si l'on écrit l'équation de ces plans dans le repère R$_T$, on s'aperçoit que **v$_O$** doit vérifier le système d'équations suivant :

[Math 5]

$$\begin{cases} u'_{1_x} \cdot \left( v_{Ox} - v_1 \cdot u'_{1_x} \right) + u'_{1_y} \cdot \left( v_{Oy} - v_1 \cdot u'_{1_y} \right) + u'_{1_z} \cdot \left( v_{Oz} - v_1 \cdot u'_{1_z} \right) = 0 \\ u'_{2_x} \cdot \left( v_{Ox} - v_2 \cdot u'_{2_x} \right) + u'_{2_y} \cdot \left( v_{Oy} - v_2 \cdot u'_{2_y} \right) + u'_{2_z} \cdot \left( v_{Oz} - v_2 \cdot u'_{2_z} \right) = 0 \\ u'_{3_x} \cdot \left( v_{Ox} - v_3 \cdot u'_{3_x} \right) + u'_{3_y} \cdot \left( v_{Oy} - v_3 \cdot u'_{3_y} \right) + u'_{3_z} \cdot \left( v_{Oz} - v_3 \cdot u'_{3_z} \right) = 0 \end{cases}$$

A la condition que (**u$_1$'**, **u$_2$'**, **u$_3$'**) soit une base (non nécessairement orthonormale) de l'espace, ce système admet une unique solution et permet ainsi de connaitre la vitesse **v$_O$** =(v$_{Ox}$, v$_{Oy}$, v$_{Oz}$)$^T$ dans R$_T$.

L'invention a été décrite en référence à un mode de réalisation particulier, mais de nombreuses variantes sont envisageables.

L'objet auquel sont fixés les capteurs peut ne pas être un drone. Par exemple, l'invention permet de connaitre la vitesse de déplacement d'un outil fixé à un bras robotique.

Les capteurs de distance et d'angle d'incidence peuvent présenter une structure et un mode de fonctionnement différents de ceux décrits en référence à la figure 7. En particulier, ils peuvent ne pas exploiter une mesure de temps de vol. Ce qui est essentiel est uniquement qu'ils fournissent à la fois une mesure de distance et d'angle d'incidence. Dans le cas d'un capteur utilisant des capteurs élémentaires de type temps de vol, comme dans la figure 7, ces capteurs élémentaires peuvent être plus ou moins que neuf et être agencés selon tout motif bi- ou tridimensionnel connu.

Les gyromètres peuvent être de tout type, et ne doivent pas nécessairement être intégrés à une centrale inertielle. Dans certains cas, ils peuvent être en nombre inférieur à trois, voire être absents :

- si le corps dont la vitesse doit être mesurée est soumis à des contraintes qui réduisent ses degrés de liberté en rotation ;

- si les capteurs de distance et d'angle d'incidence sont tous situés en correspondance du barycentre O ;

- si les capteurs de distance et d'angle d'incidence sont tous situés en un même point M, et l'on souhaite mesurer la vitesse de ce point plutôt que du barycentre O ;

- etc.

On remarque que, dans le mode de réalisation des figures 1 et 2, les capteurs sont approximativement co-localisés. Une rotation autour d'un axe (vertical dans ce mode de réalisation) qui relie le dispositif DEV au barycentre O ne joue aucun rôle dans le calcul de la vitesse en O à partir des données issues des capteurs, par conséquent, deux gyromètres peuvent suffire.

Le dispositif de traitement des données DTD peut ne pas être embarqué. Dans ces cas, le dispositif embarqué transmet les résultats des mesures à un dispositif de traitement éloigné.

Le nombre de capteurs de distance et angle d'incidence peut être supérieur à trois. Dans ce cas, la vitesse $v_O$ doit satisfaire un système d'équations surdéterminé, qui n'a généralement pas de solution exacte mais admets une pseudo-solution qui peut être trouvé par une méthode de minimisation d'erreur (généralement, moindres carrés). Le fait d'utiliser plus de trois capteurs permet soit de réduire l'effet des erreurs dues au bruit de mesure des capteurs, soit d'exclure les mesures aberrantes en les identifiant a posteriori. Pour les mêmes raisons, le nombre de gyromètres peut être choisi supérieur à trois.

Il n'est pas strictement essentiel que les axes de visée ($u_1$, $u_2$, $u_3$) soient non coplanaires, mais cela est préférable pour maximiser la probabilité qu'ils rencontrent des objets dont les normales ($u_1'$, $u_2'$, $u_3'$) sont non coplanaires (et forment donc une base de l'espace).

## Revendications

1. Dispositif d'estimation de la vitesse (DEV) d'un corps rigide mobile (DR) par rapport à son environnement (OB1, OB2, OB3), comprenant :

   - au moins trois capteurs de distance (TV1, TV2, TV3), chaque capteur de distance étant adapté pour mesurer à la fois sa distance (d) par rapport à un obstacle (OB) selon un axe de visée (AV) et un angle (a) formé par ledit axe de visée et la surface dudit obstacle, localement assimilée à un plan; et
   - un dispositif de traitement de données (DTD), configuré ou programmé pour calculer une estimation du vecteur vitesse ($v_O$) du corps mobile, auquel le dispositif d'estimation est fixé, en fonction de mesures de distance et d'angle issues desdits capteurs ; dans lequel le dispositif de traitement de données est configuré ou programmé pour :
   - calculer la composante du vecteur vitesse de chaque capteur de distance perpendiculaire à l'obstacle correspondant à partir d'au moins deux mesures successives de distance et d'angle issues dudit capteur, et
   - obtenir le vecteur vitesse du corps mobile à partir desdites composantes.

2. Dispositif selon la revendication 1, dans lequel les axes de visée des capteurs sont alignés selon au moins trois directions non coplanaires ($u_1$, $u_2$, $u_3$).

3. Dispositif selon l'une des revendications précédentes comprenant plus de trois dits capteurs de distance, le dispositif de traitement de données étant configuré pour obtenir le vecteur vitesse du corps mobile à partir de la composante du vecteur vitesse de chaque capteur de distance perpendiculaire à l'obstacle correspondant en appliquant une méthode de minimisation d'erreur.

4. Dispositif selon l'une des revendications précédentes comprenant également au moins un gyromètre (GM1, GM2, GM3) adapté pour mesurer une vitesse angulaire dudit corps mobile, le dispositif de traitement de données étant adapté pour calculer la composante du vecteur vitesse d'un points prédéfini du corps mobile perpendiculaire à un obstacle à partir de la composante du vecteur vitesse de chaque capteur de distance perpendiculaire audit obstacle et la vitesse angulaire mesurée par le gyromètre.

5. Dispositif selon la revendication 4 comprenant au moins trois dits gyromètres avec des axes de mesure non coplanaires.

6. Dispositif selon l'une des revendications précédentes, dans lequel lesdits capteurs de distance sont des capteurs à temps de vol comprenant un détecteur matriciel.

**7.** Drone (DR) équipé d'un dispositif d'estimation de sa vitesse (DEV) selon l'une des revendications précédentes.

[Fig. 1]

[Fig. 2]

[Fig. 3]

[Fig. 4]

[Fig. 5]

[Fig. 6]

[Fig. 7]

Europäisches Patentamt
European Patent Office
Office européen des brevets

# RAPPORT DE RECHERCHE EUROPEENNE

Numéro de la demande

EP 19 22 0096

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 555 545 A1 (RAFAEL ARMAMENT DEV AUTHORITY [IL]) 20 juillet 2005 (2005-07-20) * page 4, ligne 11 - page 5, ligne 11 * * page 5, ligne 18 - page 6, ligne 7 * * page 6, ligne 52 - page 8, ligne 4 * * figures 3-6 * ----- | 1-7 | INV. G01S17/933 G01S15/93 G01S17/875 G01S15/87 G01S13/87 G01S13/60 G01S13/58 |
| A | EP 1 724 592 A1 (EUROCOPTER FRANCE [FR]) 22 novembre 2006 (2006-11-22) * page 2, ligne 1 - ligne 7 * * page 3, ligne 19 - ligne 22 * * page 5, ligne 42 - page 6, ligne 7 * * page 8, ligne 9 - ligne 27 * * page 10, ligne 19 * * page 14, ligne 27 - ligne 36 * * figures 1-19 * ----- | 1-7 | G01S15/58 G01S15/60 G01S17/58 G01S13/935 |
| A | EP 3 163 323 A1 (SIKORSKY AIRCRAFT CORP [US]) 3 mai 2017 (2017-05-03) * alinéa [0024] * * alinéa [0029] * * figures 1-4 * ----- | 1-7 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 18 mai 2020 | Köppe, Maro |

**ANNEXE AU RAPPORT DE RECHERCHE EUROPEENNE
RELATIF A LA DEMANDE DE BREVET EUROPEEN NO.**

EP 19 22 0096

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-2020

| Document brevet cité au rapport de recherche | | Date de publication | Membre(s) de la famille de brevet(s) | | Date de publication |
|---|---|---|---|---|---|
| EP 1555545 | A1 | 20-07-2005 | EP | 1555545 A1 | 20-07-2005 |
| | | | US | 2005174560 A1 | 11-08-2005 |
| EP 1724592 | A1 | 22-11-2006 | EP | 1724592 A1 | 22-11-2006 |
| | | | FR | 2886020 A1 | 24-11-2006 |
| | | | US | 2007075893 A1 | 05-04-2007 |
| EP 3163323 | A1 | 03-05-2017 | EP | 3163323 A1 | 03-05-2017 |
| | | | US | 2017116867 A1 | 27-04-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 9810767 B
- FR 3000813
- US 9387927 B
- EP 2644240 A
- US 8989924 B